# EUROPEAN PATENT APPLICATION

(11) **EP 4 796 667 A1**
(43) Date of publication of application: **26.08.2026**
(21) Application number: 23956231.7
(22) Date of filing: 20.12.2023
(51) Int. Cl.: C23C 2/26, C23C 2/06, C23C 2/28, C23C 2/40, C23C 2/14, C22C 38/00, B05D 1/04, B05D 7/24

(54) **GALVANIZED STEEL SHEET AND METHOD OF MANUFACTURING SAME**

(30) Priority: 17.10.2023 KR 20230138875
(71) Applicant: POSCO Co., Ltd, Gyeongsangbuk-do 37859 (KR)
(72) Inventor: JO, Du-Hwan, Pohang-si, Gyeongsangbuk-do 37877 (KR); YOO, Bong-Hwan, Gwangyang-si, Jeollanam-do 57807 (KR); KIM, Myung-Soo, Pohang-si, Gyeongsangbuk-do 37877 (KR)
(74) Representative: Meissner Bolte Partnerschaft mbB
(86) International application number: PCT/KR2023/021114
(87) International publication number: WO 2025/084509

(57) **Abstract**

One aspect of the present invention is to provide a galvanized steel sheet and a method of manufacturing same. Another aspect of the present invention is to provide a galvanized steel sheet having fine spangles and good painting quality and a method of manufacturing same.

## Description

### Technical Field

The present disclosure relates to a hot-dip galvanized steel sheet and a method of manufacturing the same.

### Background Art

In general, a hot-dip galvanized steel sheet is manufactured by immersing a steel sheet, which has passed through an annealing furnace, in a hot-dip galvanizing bath and then allowing the molten zinc coated on the steel sheet to solidify. The molten zinc plated on the steel sheet is cooled, and spangles, which are dendritic grains, are formed on a surface of the plating layer. When zinc solidifies, dendrites grow extremely rapidly from solidification nuclei in an initial stage of solidification, and a coarse spangle pattern is formed. Accordingly, the size of the spangles is determined in the initial stage of solidification.

Due to the coarse spangles formed on the surface of the plating layer, the corrosion resistance, coating adhesion, and post-coating surface appearance of the plating layer are deteriorated.

Accordingly, the quality of the hot-dip galvanized steel sheet may be improved by reducing the size of the spangles formed on the hot-dip galvanized steel sheet.

Examples of conventional methods for reducing the size of spangles include (1) a method using a plating bath to which antimony (Sb) or lead (Pb) involved in spangle formation is not added, (2) a method of applying pressure with a skin pass roll after plating, and (3) a method of spraying water or a phosphate aqueous solution before the coated zinc solidifies.

However, in such conventional methods, the size of the spangles is not sufficiently reduced, and a phosphate component remains, causing a side effect in which coating quality is deteriorated in an additional process.

Accordingly, there is a need for a method for precisely reducing the size of the spangles of the hot-dip galvanized steel sheet while improving surface appearance and quality without the above-mentioned side effect.

### Summary of Invention

### Technical Problem

An aspect of the present disclosure is to provide a hot-dip galvanized steel sheet and a method of manufacturing the same.

Another aspect of the present disclosure is to provide a hot-dip galvanized steel sheet having fine spangles and excellent coating quality, and a method of manufacturing the same.

### Solution to Problem

According to an aspect of the present disclosure, a hot-dip galvanized steel sheet includes a base steel sheet and a hot-dip galvanized layer formed on at least one surface of the base steel sheet, wherein an average size of spangles formed on a surface of the hot-dip galvanized layer is 150 µm or less (excluding 0 µm), and a content of C in a region within 2 µm in a thickness direction from the surface of the hot-dip galvanized layer is 0.2 wt% or less (including 0%).

According to another aspect of the present disclosure, a method of manufacturing a hot-dip galvanized steel sheet includes: forming a hot-dip galvanized layer on at least one surface of a base steel sheet; spraying an aqueous solution onto the hot-dip galvanized layer; and cooling the hot-dip galvanizing onto which the aqueous solution is sprayed, wherein the spraying of the aqueous solution includes spraying a mixed aqueous solution and air, the mixed aqueous solution contains water, urea, and alcohol, an average size of droplets when the mixed aqueous solution is sprayed is 10 to 50 µm, a content of the urea is 0.1 to 5.0 wt%, and a content of the alcohol is 0.1 to 5.0 wt%.

The method may further include, between the forming of the hot-dip galvanized layer and the spraying of the aqueous solution, adjusting a coating amount of the hot-dip galvanized layer.

The mixed aqueous solution may be sprayed at a spray start temperature corresponding to a steel sheet temperature ranging from a hot-dip galvanizing treatment temperature to 419°C and at a spraying end temperature corresponding to a steel sheet temperature ranging from 417 to 415°C.

The mixed aqueous solution may be sprayed by passing through a charging electrode.

When the mixed aqueous solution passes through the charging electrode, a voltage applied to the charging electrode may be - 1 to -50 kV.

The alcohol may be one or more selected from the group consisting of ethanol, propanol, isopropanol, butanol, and isobutanol.

A spray pressure of the air may be 1.5 to 5.0 kgf/cm².

A spray pressure of the mixed aqueous solution may be 0.5 to 2.5 kgf/cm².

The mixed aqueous solution and the air may be sprayed at a pressure ratio of 0.3 to 0.9.

### Advantageous Effects of Invention

According to an aspect of the present disclosure, it is possible to provide a hot-dip galvanized steel sheet and a method of manufacturing the same.

According to another aspect of the present disclosure, it is possible to provide a hot-dip galvanized steel sheet having fine spangles and excellent coating quality, which is preferable for use as interior and exterior panels of automobile bodies, home appliances, and building materials, and a method of manufacturing the same.

### Brief Description of Drawings

FIG. 1 is a schematic view showing an example embodiment of an apparatus for manufacturing a hot-dip galvanized steel sheet applicable to the present disclosure.
FIG. 2 shows EPMA analysis results for a hot-dip galvanized layer of Inventive Example 1 according to an example embodiment in the present disclosure.
FIG. 3 shows EPMA analysis results for a hot-dip galvanized layer of Comparative Example 6, which is outside the scope of the example embodiment in the present disclosure.

### Best Mode for Invention

Hereinafter, a hot-dip galvanized steel sheet according to an example embodiment in the present disclosure will be described.

The hot-dip galvanized steel sheet according to an example embodiment in the present disclosure includes a base steel sheet and a hot-dip galvanized layer formed on at least one surface of the base steel sheet. In the present disclosure, the type of the base steel sheet is not particularly limited, and all steel sheets for hot-dip galvanized steel sheets that are commonly used in the art may be used. In addition, in the present disclosure, the type of the hot-dip galvanized layer is also not particularly limited. However, as an example, the hot-dip galvanized layer may be formed of pure zinc (Zn), and may further contain one or more of aluminum (Al), magnesium (Mg), antimony (Sb), and lead (Pb). More specifically, the hot-dip galvanized layer may contain 0.13 to 0.3 wt% of Al and the balance of Zn, and may be a binary Zn-Al hot-dip galvanized layer or a ternary Zn-Al-Mg hot-dip galvanized layer. The binary Zn-Al hot-dip galvanized layer may contain 40 to 95 wt% of Al, and the ternary Zn-Al-Mg hot-dip galvanized layer may contain 0.1 to 30% of each of Al and Mg.

It is preferable that, in the hot-dip galvanized steel sheet of the present disclosure, an average size of spangles formed on a surface of the hot-dip galvanized layer is 150 µm or less (excluding 0 µm). By forming fine spangles as described above, corrosion resistance, coating adhesion, and surface appearance of the hot-dip galvanized steel sheet may be improved. When the average size of the spangles exceeds 150 µm, it may be difficult to sufficiently achieve the above-described effect of refining the spangles. Accordingly, it is preferable that the average size of the spangles is 150 µm or less (excluding 0 µm). The average size of the spangles is more advantageously 140 µm or less, still more advantageously 130 µm or less, and most advantageously 120 µm or less.

In the hot-dip galvanized steel sheet of the present disclosure, it is preferable that a content of C in a region within 2 µm in a thickness direction from the surface of the hot-dip galvanized layer is 0.2 wt% or less (including 0%). When C is present in a surface layer portion of the hot-dip galvanized layer, weldability and coating adhesion may be deteriorated. In the present disclosure, by controlling the content of C in the surface layer portion of the hot-dip galvanized layer as described above, it is possible to enhance usability of the steel sheet together with an effect of improving surface appearance. However, in the present disclosure, an upper limit of the content of C in the surface layer portion of the hot-dip galvanized layer is limited to 0.2 wt%, and, when the content of C exceeds 0.2 wt%, the above-described problem may occur. Accordingly, it is preferable that the content of C in the region within 2 µm in the thickness direction from the surface of the hot-dip galvanized layer is 0.2 wt% or less (including 0%). The content of C in the region within 2 µm in the thickness direction from the surface of the hot-dip galvanized layer is more advantageously 0.1 wt% or less.

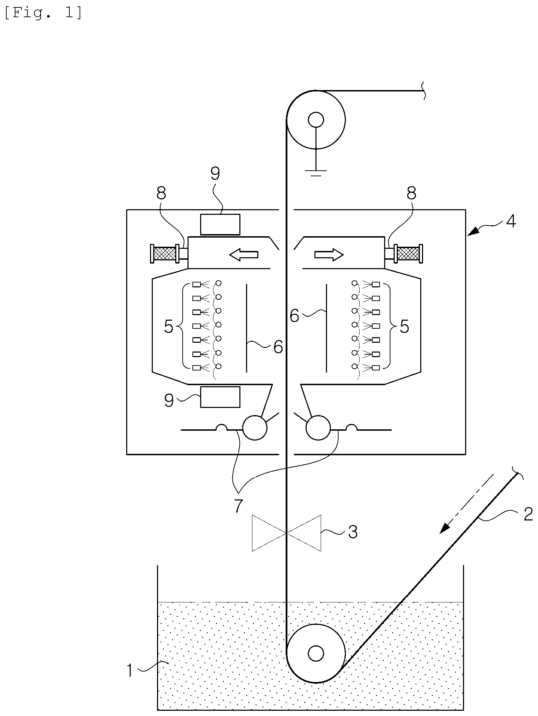

FIG. 1 is a schematic view showing an example embodiment of an apparatus for manufacturing a hot-dip galvanized steel sheet applicable to the present disclosure. Hereinafter, with reference to FIG. 1, a method of manufacturing a hot-dip galvanized steel sheet according to an example embodiment in the present disclosure will be described.

First, a hot-dip galvanized layer is formed on at least one surface of a base steel sheet. In the present disclosure, a method of forming the hot-dip galvanized layer is not particularly limited, and any method of forming a hot-dip galvanized layer commonly used in the art may be used. For example, as shown in FIG. 1, a method of immersing a base steel sheet 2 in a hot-dip galvanizing bath 1 may be used.

Meanwhile, after the formation of the hot-dip galvanized layer, the method may further include adjusting a coating amount of the hot-dip galvanized layer. Through a process of adjusting the coating amount of the hot-dip galvanized layer, excess plating metal may be removed, and the coating amount may be appropriately controlled. In the present disclosure, a method of adjusting the coating amount of the hot-dip galvanized layer is not particularly limited, and, as an example, an air wiping process using an air knife 3 may be used. In addition, in the present disclosure, the coating amount is also not particularly limited, and may be appropriately controlled according to an intended use of the hot-dip galvanized steel sheet. However, as an example, the coating amount on one surface may be in a range of 20 to 500 g/m².

Thereafter, an aqueous solution is sprayed onto the hot-dip galvanized layer. When the aqueous solution is sprayed, it is preferable to spray a mixed aqueous solution and air. In general, spangles are formed through a process in which solidification nuclei are generated and the nuclei grow when a zinc plating layer in a molten state is cooled. In order to reduce the size of the spangles, a density of the solidification nuclei is to be increased in a solidification reaction stage of the plating layer, and solidification is to be terminated before dendrites grow. Accordingly, in the present disclosure, by spraying air together when the aqueous solution is sprayed, droplets of the aqueous solution are atomized into a mist, thereby increasing the density of solidification nuclei and causing the droplets to act as solidification nuclei on the surface of the steel sheet. Meanwhile, conventionally, a phosphate-based aqueous solution has been used to promote nucleation on the surface of the plating layer. However, after drying, the phosphate-based aqueous solution contaminates surrounding facilities or remains on the surface of the steel sheet as a glassy film, causing secondary deterioration in physical properties, thereby limiting its use. In particular, the glassy phosphate remaining on the surface of the steel sheet also causes deterioration of coating adhesion during coating and low-temperature joining brittleness. In the present disclosure, in order to solve these problems, a cooling rate of the plating layer is increased when the aqueous solution is sprayed, and a mixed aqueous solution containing water, urea, and alcohol is sprayed so that no residue is generated after drying. The mixed aqueous solution and the air may be sprayed through a spraying nozzle 5.

That is, when a mixed aqueous solution containing water, urea, and alcohol is sprayed instead of a conventional phosphate aqueous solution, a solidification rate on the surface of the steel sheet is promoted by heat of endothermic reaction of urea, heat of evaporation of alcohol, and heat of vaporization of water, as represented by [Formula 1], [Formula 2], and [Formula 3] below. In addition, the alcohol reduces a surface tension of the aqueous solution, such that, when spraying, droplets become finer than in the case of the phosphate aqueous solution, more solidification nuclei are formed, molten zinc is cooled more rapidly, and the spangles become finer. Meanwhile, the water and the urea constituting the mixed aqueous solution may be added using a urea aqueous solution commonly used in the art. In the present disclosure, the type of the urea aqueous solution is not particularly limited. For example, AdBlue^{®} consisting of 67.5% purified water and 32.5% urea ((NH₂)₂CO) may be diluted and used.

[Formula 1] (NH₂)₂CO + H₂O → 2NH₃ + CO₂ ΔH° (heat of reaction) = 185.5 kJ/mol

[Formula 2] C₂H₅OH(l) → C₂H₅OH (g) ΔH° (heat of evaporation) = 39.3 kJ/mol

[Formula 3] H₂O(l) → H₂O (g) ΔH° (heat of vaporization) = 43.1 kJ/mol

The mixed aqueous solution may be sprayed at a spray start temperature corresponding to a steel sheet temperature ranging from a hot-dip galvanizing treatment temperature to 419°C and at a spraying end temperature corresponding to a steel sheet temperature ranging from 417 to 415°C. This is because, in order to promote formation of solidification nuclei, it is effective to provide solidification nuclei from outside. The "hot-dip galvanizing treatment temperature" refers to a temperature of the steel sheet in a state in which a coating amount of the hot-dip galvanized layer is adjusted, more specifically, a temperature of the steel sheet in a state of being air-wiped in a plating process, and the steel sheet is cooled and molten zinc solidifies by spraying an aqueous solution onto the steel sheet from the hot-dip galvanizing treatment temperature. However, according to experiments, only droplets attached near a steel sheet temperature of 419°C may serve as solidification nuclei, and the aqueous solution sprayed onto the steel sheet before solidification of molten zinc starts or after solidification of molten zinc starts only serves to remove heat from the steel sheet. Accordingly, in order to allow a large number of solidification nuclei to be formed, it is preferable to spray the aqueous solution onto the steel sheet near 419°C. That is, when a temperature of the steel sheet at which spraying of the aqueous solution starts is lower than 419°C, there is a risk that spangles become large and traces of dendrites occur. However, since it is difficult to accurately measure a temperature of the steel sheet to be manufactured, spraying at 419°C or higher, at which the hot-dip galvanized layer is completely in a molten state, may prevent a plating structure from becoming coarse. Accordingly, a spray start temperature of the mixed aqueous solution may be a steel sheet temperature ranging from the hot-dip galvanizing treatment temperature to 419°C, more advantageously a steel sheet temperature ranging from 460 to 419°C, and still more advantageously a steel sheet temperature ranging from 430 to 419°C. In addition, when a spraying end temperature of the mixed aqueous solution exceeds 417°C, there is a risk that the formed solidification nuclei are remelted, and, when the spraying end temperature is lower than 415°C, the solidification and cooling effects are saturated. Accordingly, the spraying end temperature of the mixed aqueous solution may be 417 to 415°C.

It is important to attach as many droplets as possible to the steel sheet within the spray start temperature range and the spraying end temperature range. In consideration of this, with the same spray amount of the solution, smaller droplets are more advantageous than larger droplets because the number of droplets may be increased.

For this purpose, the mixed aqueous solution may be sprayed by passing through a high-voltage charging electrode 6. Accordingly, the droplets of the aqueous solution may be electrically charged so as to be attached to the steel sheet by an electrical attractive force between the droplets and the steel sheet. Meanwhile, when a mesh-type charging electrode is used as the high-voltage charging electrode, a uniform electric field may be formed, and the effect of the high voltage may be further improved. Furthermore, since the droplets may be made finer, pitting caused by collision of large droplets with the plating layer in a molten state is prevented, thereby preventing damage to appearance.

This effect becomes more pronounced as the applied voltage increases. For this purpose, when the mixed aqueous solution passes through the charging electrode, the voltage applied to the charging electrode may be -1 to -50 kV. When the voltage is lower than -1 kV, coarse spangles may be formed, and, when the voltage is excessively increased, electric sparks may occur between the charging electrode and the steel sheet. Therefore, it is preferable that the voltage is -50 kV or lower. Meanwhile, the charging electrode is for forming negatively charged droplets (mist), and the minus sign of the voltage indicates polarity.

When the mixed aqueous solution is sprayed, it is preferable that the average size of the droplets is 10 to 50 µm. By controlling the average size of the droplets in this manner, spangles having a uniform size are formed, and a better surface appearance may be obtained. When the average size of the droplets is less than 10 µm, the amount of the droplets reaching the steel sheet may be reduced, and, when the average size of the droplets exceeds 50 µm, an effect of refining the spangles becomes smaller. Accordingly, it is preferable that the average size of the droplets is 10 to 50 µm. The lower limit of the average size of the droplets is more advantageously 15 µm, and still more advantageously 20 µm. The upper limit of the average size of the droplets is more advantageously 45 µm, and still more advantageously 40 µm.

Meanwhile, as described in [Formula 1], [Formula 2], and [Formula 3] above, as urea in the urea aqueous solution is decomposed together with evaporation of the alcohol and water, latent heat is removed from the steel sheet by an endothermic reaction, and components temporarily remaining on the surface act as solidification nuclei, around which the plating layer solidifies. In addition, the alcohol serves to reduce a surface tension of the aqueous solution and reduce a size of droplets when sprayed, and also increases a cooling effect on the surface by heat of evaporation. In general, since one solidification nucleus forms one spangle, as the droplets of the aqueous solution become smaller at the same spray amount of the aqueous solution, the density of solidification nuclei increases, which is advantageous for manufacturing a hot-dip galvanized steel sheet having smaller spangles. Accordingly, in order to further promote formation of solidification nuclei in the solidification reaction, it is preferable to spray the mixed aqueous solution at an appropriate concentration.

It is preferable that a content of the urea is 0.1 to 5.0 wt%. When the content of the urea is less than 0.1%, an effect of refining the spangles may not be sufficiently obtained. When the content of the urea exceeds 5.0%, the manufacturing cost may increase, and the urea may be dried and converted into a solid powder, thereby contaminating surrounding facilities. In addition, as a large amount of C remains in a surface layer portion of the plating layer, weldability and coating adhesion may be deteriorated. Accordingly, it is preferable that the content of the urea is 0.1 to 5.0 wt%. The lower limit of the content of the urea is more advantageously 0.2 wt%, and still more advantageously 0.3 wt%. The upper limit of the content of the urea is more advantageously 4.5 wt%, and still more advantageously 4.0 wt%.

It is preferable that a content of the alcohol is 0.1 to 5.0 wt%. When the content of the alcohol is less than 0.1%, an effect of refining the spangles may not be sufficiently obtained, and, when the content of the alcohol exceeds 5.0%, the manufacturing cost may increase and odor-related problems may occur due to volatility. Accordingly, it is preferable that the content of the alcohol is 0.1 to 5.0 wt%. The lower limit of the content of the alcohol is more advantageously 0.3 wt%, and still more advantageously 0.5 wt%. The upper limit of the content of the alcohol is more advantageously 4.0 wt%, and still more advantageously 3.0 wt%. Meanwhile, in the present disclosure, the type of the alcohol is not particularly limited, and, for example, one or more selected from the group consisting of ethanol, propanol, isopropanol, butanol, and isobutanol may be used.

Meanwhile, a spray pressure of the air may be 1.5 to 5.0 kgf/cm². When the spray pressure of the air is less than 1.5 kgf/cm², the spray pressure is too low, and sprayed droplets of the aqueous solution may be difficult to attach to the steel sheet. When the spray pressure of the air exceeds 5.0 kgf/cm², kinetic energy of the sprayed droplets of the aqueous solution is too high, and pitting marks, in which a surface of the plating layer is indented by the droplets, may occur, thereby damaging surface appearance.

A spray pressure of the mixed aqueous solution may be 0.5 to 2.5 kgf/cm². When the spray pressure of the mixed aqueous solution is less than 0.5 kgf/cm², an effect of refining the spangles may be reduced. When the spray pressure of the mixed aqueous solution exceeds 2.5 kgf/cm², pitting marks caused by collision of droplets of the aqueous solution with the surface of the steel sheet may occur, thereby damaging appearance.

The mixed aqueous solution and the air may be sprayed at a pressure ratio of 0.3 to 0.9. When the pressure ratio of the mixed aqueous solution to the air is less than 0.3, the aqueous solution is not sprayed, and it may be difficult to obtain an effect of refining the spangles. When the pressure ratio of the mixed aqueous solution to the air exceeds 0.9, drop marks may occur, thereby damaging surface appearance.

Thereafter, the hot-dip galvanizing onto which the aqueous solution is sprayed is cooled. Through the cooling process, a hot-dip galvanized layer having refined spangles may be formed. In the present disclosure, the cooling process is not particularly limited, and any cooling condition commonly used in the art may be used.

### Mode for Invention

Hereinafter, the present disclosure will be described in more detail with reference to Examples. However, it should be noted that the following Examples are intended only to illustrate the present disclosure in more detail and are not intended to limit the scope of the present disclosure. This is because the scope of the present disclosure is determined by the matters recited in the claims and matters reasonably inferred therefrom.

### (Examples)

A base steel sheet having a thickness of 0.8 mm and containing, by wt%, 0.03% of C, 0.01% of Si, 0.15% of Mn, 0.008% of P, and the balance of Fe and other inevitable impurities was immersed at a moving speed of 80 m/min in a hot-dip galvanizing bath containing 0.18 wt% of Al and the balance of Zn, and air-wiped, thereby forming a hot-dip galvanized layer on the base steel sheet so as to have a coating amount of 70 g/m² per side. Thereafter, a mixed aqueous solution having the composition shown in Table 1 and air were simultaneously sprayed onto a surface of the hot-dip galvanized layer through a two-fluid spraying nozzle. At this time, a spray start temperature of the mixed aqueous solution was a steel sheet temperature of 420°C, and a spraying end temperature was a steel sheet temperature of 417°C. Thereafter, the hot-dip galvanized layer onto which the aqueous solution was sprayed was cooled. Meanwhile, in Comparative Example 10, the above-described spraying of the mixed aqueous solution and the air was not performed.

With respect to the hot-dip galvanized layer of the hot-dip galvanized steel sheet manufactured as described above, an average size of spangles, a content of carbon in a surface layer portion, corrosion resistance, coating adhesion, and surface appearance were measured. The results thereof are shown in Table 2.

The average size of the spangles was measured as follows. In photographs of the hot-dip galvanized layer observed using an optical microscope and SEM, 10 vertical straight lines and 10 horizontal straight lines were drawn at equal intervals, and the total number of spangles intersected by these straight lines was counted. Thereafter, the sum of the lengths of the straight lines was obtained and then divided by the total number of spangles to measure an average length of one spangle, and the average length was regarded as an equivalent circle diameter and used as an average size of the spangles (sum of lengths of straight lines/total number of spangles = average length of one spangle).

As the content of carbon in the surface layer portion of the hot-dip galvanized layer, a content of C in a region within 2 µm in a thickness direction from the surface of the hot-dip galvanized layer was measured using an EDS carbon atom surface analysis method.

Meanwhile, in order to evaluate corrosion resistance and coating adhesion after coating, specimens were prepared from the manufactured hot-dip galvanized steel sheet. The specimen was prepared by coating the hot-dip galvanized steel sheet with a melamine-alkyd resin to a thickness of about 20 µm using a roll-coater coating tester, baking the coated steel sheet for 30 seconds at a peak metal temperature (PMT) of 160°C, and then water-cooling the baked steel sheet to room temperature.

Corrosion resistance after coating was evaluated by spraying 5% NaCl at 35°C onto the specimen at a spray pressure of 1 Kg/m² using a salt spraying apparatus (Japanese Industrial Standard test method JIS E2731), and then measuring the time required for 5% white rust to occur. At this time, the case in which the time was 480 hours or longer and 680 hours or shorter was evaluated as ∘ (excellent), the case in which the time was 360 hours or longer and shorter than 480 hours was evaluated as △ (normal), and the case in which the time was shorter than 360 hours was evaluated as × (poor).

Coating adhesion was evaluated by immersing the specimen in distilled water at 50°C for 240 hours, naturally drying the specimen, forming 100 grid marks in a checkerboard pattern at intervals of 1 mm on a surface of the coating film, peeling the coating film with Scotch tape, and then counting the number of coating film pieces peeled off by the tape. At this time, the case in which no peeling occurred was evaluated as ∘ (excellent), the case in which a peeling ratio was more than 0% and 3% or less was evaluated as △ (normal), and the case in which the peeling ratio was more than 3% was evaluated as × (poor).

Surface appearance was evaluated by measuring a color difference (ΔE) relative to that of Comparative Example 10, and then evaluating the case in which the color difference was 0.5 or more as ∘, the case in which the color difference was 0.3 or more and less than 0.5 as △ (normal), and the case in which the color difference was less than 0.3 as × (poor).

**[Table 1]**

| Classification | Composition of mixed aqueous solution (wt%) | | | Average size of droplets (µm) | Air spray pressure (kgf/cm²) | Mixed aqueous solution spray pressure (kgf/cm²) | Pressure ratio of mixed aqueous solution to air |
|---|---|---|---|---|---|---|---|
| | Urea | Alcohol | Water | | | | |
| Inventive Example 1 | 5 | 0.1 | Balance | 50 | 1.5 | 0.9 | 0.6 |
| Inventive Example 2 | 3 | 0.1 | Balance | 50 | 1.5 | 0.9 | 0.6 |
| Inventive Example 3 | 1 | 0.1 | Balance | 50 | 1.5 | 0.9 | 0.6 |
| Inventive Example 4 | 0.5 | 0.1 | Balance | 50 | 1.5 | 0.9 | 0.6 |
| Inventive Example 5 | 5 | 3 | Balance | 40 | 1.5 | 0.9 | 0.6 |
| Inventive Example 6 | 3 | 3 | Balance | 40 | 1.5 | 0.9 | 0.6 |
| Inventive Example 7 | 1 | 3 | Balance | 40 | 1.5 | 0.9 | 0.6 |
| Inventive Example 8 | 0.5 | 3 | Balance | 40 | 1.5 | 0.9 | 0.6 |
| Inventive Example 9 | 5 | 1.5 | Balance | 40 | 1.5 | 0.9 | 0.6 |
| Inventive Example 10 | 3 | 1.5 | Balance | 40 | 1.5 | 0.9 | 0.6 |
| Inventive Example 11 | 1 | 1.5 | Balance | 40 | 1.5 | 0.9 | 0.6 |
| Inventive Example 12 | 0.5 | 1.5 | Balance | 40 | 1.5 | 0.9 | 0.6 |
| Comparative Example 1 | 0 | 0 | Balance | 100 | 2.5 | 1.5 | 0.6 |
| Comparative Example 2 | 0 | 3 | Balance | 90 | 2.5 | 1.5 | 0.6 |
| Comparative Example 3 | 0 | 1 | Balance | 90 | 2.5 | 1.5 | 0.6 |
| Comparative Example 4 | 0 | 3 | Balance | 70 | 2.5 | 1.5 | 0.6 |
| Comparative Example 5 | 0 | 1 | Balance | 70 | 2.5 | 1.5 | 0.6 |
| Comparative Example 6 | 7 | 3 | Balance | 60 | 2.5 | 1.5 | 0.6 |
| Comparative Example 7 | 7 | 3 | Balance | 40 | 2.5 | 1.5 | 0.6 |
| Comparative Example 8 | 0.1 | 3 | Balance | 80 | 2.5 | 1.5 | 0.6 |
| Comparative Example 9 | 0.1 | 3 | Balance | 70 | 2.5 | 1.5 | 0.6 |
| Comparative Example 10 | - | - | - | - | - | - | - |

**[Table 2]**

| Classification | Average size of spangles (µm) | Content of carbon in surface layer portion (wt%) | Corrosion resistance after coating | Coating adhesion | Surface appearance |
|---|---|---|---|---|---|
| Inventive Example 1 | 150 | 0.1 | ○ | ○ | ○ |
| Inventive Example 2 | 150 | 0.1 | ○ | ○ | ○ |
| Inventive Example 3 | 150 | 0.1 | ○ | ○ | ○ |
| Inventive Example 4 | 150 | 0.1 | ○ | ○ | ○ |
| Inventive Example 5 | 120 | 0.1 | ○ | ○ | ○ |
| Inventive Example 6 | 120 | 0.1 | ○ | ○ | ○ |
| Inventive Example 7 | 120 | 0.1 | ○ | ○ | ○ |
| Inventive Example 8 | 120 | 0.1 | ○ | ○ | ○ |
| Inventive Example 9 | 120 | 0.1 | ○ | ○ | ○ |
| Inventive Example 10 | 120 | 0.1 | ○ | ○ | ○ |
| Inventive Example 11 | 120 | 0.1 | ○ | ○ | ○ |
| Inventive Example 12 | 120 | 0.1 | ○ | ○ | ○ |
| Comparative Example 1 | 300 | 0.1 | ○ | ○ | △ |
| Comparative Example 2 | 250 | 0.1 | ○ | ○ | △ |
| Comparative Example 3 | 260 | 0.1 | ○ | ○ | △ |
| Comparative Example 4 | 200 | 0.1 | ○ | ○ | △ |
| Comparative Example 5 | 200 | 0.1 | ○ | ○ | △ |
| Comparative Example 6 | 180 | 0.5 | △ | △ | ○ |
| Comparative Example 7 | 120 | 0.5 | △ | △ | ○ |
| Comparative Example 8 | 240 | 0.1 | ○ | ○ | △ |
| Comparative Example 9 | 200 | 0.1 | ○ | ○ | △ |
| Comparative Example 10 | 500 | 0.1 | ○ | ○ | × |

As can be seen from Tables 1 and 2, in Inventive Examples 1 to 12 satisfying the conditions proposed by the present disclosure, corrosion resistance, coating adhesion, and surface appearance are excellent. On the other hand, in Comparative Examples 1 to 10 not satisfying the conditions proposed by the present disclosure, one or more of corrosion resistance, coating adhesion, and surface appearance are not excellent.

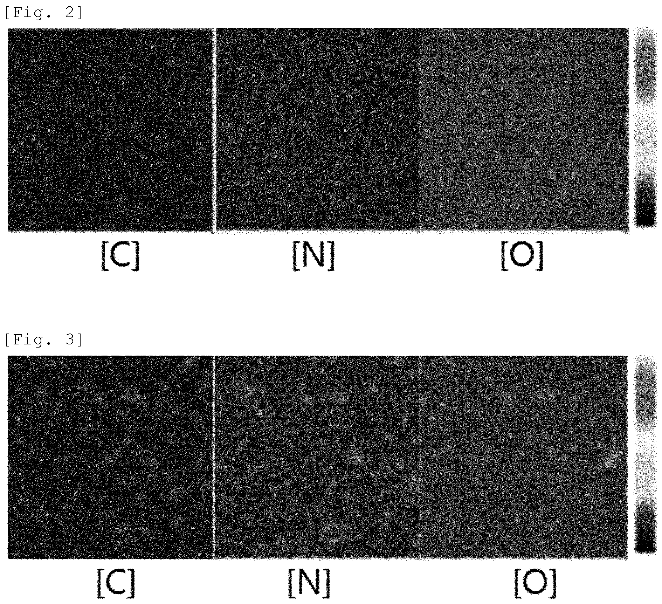

FIG. 2 shows EPMA analysis results for the hot-dip galvanized layer of Inventive Example 1. FIG. 3 shows EPMA analysis results for the hot-dip galvanized layer of Comparative Example 23. As can be seen from FIGS. 2 and 3, in the case of Inventive Example 1, almost no carbon is observed, whereas, in the case of Comparative Example 6, a relatively large amount of carbon is observed.

### [Description of Reference Characters]

1: Hot-dip galvanizing bath
2: Base steel sheet
3: Air knife
4: Spray tank
5: Spraying nozzle
6: Charging electrode
7: Air curtain
8: Intake hood
9: Pyrometer

## Claims

1. A hot-dip galvanized steel sheet comprising a base steel sheet and a hot-dip galvanized layer formed on at least one surface of the base steel sheet,
wherein an average size of spangles formed on a surface of the hot-dip galvanized layer is 150 µm or less (excluding 0 µm), and
a content of C in a region within 2 µm in a thickness direction from the surface of the hot-dip galvanized layer is 0.2 wt% or less (including 0%).

2. A method of manufacturing a hot-dip galvanized steel sheet, the method comprising:
forming a hot-dip galvanized layer on at least one surface of a base steel sheet;
spraying an aqueous solution onto the hot-dip galvanized layer; and
cooling the hot-dip galvanizing onto which the aqueous solution is sprayed,
wherein the spraying of the aqueous solution includes spraying a mixed aqueous solution and air,
the mixed aqueous solution contains water, urea, and alcohol,
an average size of droplets when the mixed aqueous solution is sprayed is 10 to 50 µm,
a content of the urea is 0.1 to 5.0 wt%, and
a content of the alcohol is 0.1 to 5.0 wt%.

3. The method of claim 2, further comprising, between the forming of the hot-dip galvanized layer and the spraying of the aqueous solution, adjusting a coating amount of the hot-dip galvanized layer.

4. The method of claim 2, wherein the mixed aqueous solution is sprayed at a spray start temperature corresponding to a steel sheet temperature ranging from a hot-dip galvanizing treatment temperature to 419°C and at a spraying end temperature corresponding to a steel sheet temperature ranging from 417 to 415°C.

5. The method of claim 2, wherein the mixed aqueous solution is sprayed by passing through a charging electrode.

6. The method of claim 5, wherein, when the mixed aqueous solution passes through the charging electrode, a voltage applied to the charging electrode is -1 to -50 kV.

7. The method of claim 2, wherein the alcohol is one or more selected from the group consisting of ethanol, propanol, isopropanol, butanol, and isobutanol.

8. The method of claim 2, wherein a spray pressure of the air is 1.5 to 5.0 kgf/cm².

9. The method of claim 2, wherein a spray pressure of the mixed aqueous solution is 0.5 to 2.5 kgf/cm².

10. The method of claim 2, wherein the mixed aqueous solution and the air are sprayed at a pressure ratio of 0.3 to 0.9.
